# EUROPEAN PATENT SPECIFICATION

(11) **EP 2 774 438 B1**
(45) Date of publication and mention of the grant of the patent: **04.11.2020**
(21) Application number: 12846276.9
(22) Date of filing: 27.09.2012
(51) Int. Cl.: H04L 5/00, H04L 27/26

(54) **DMRS ARRANGEMENTS FOR COORDINATED MULTI-POINT COMMUNICATION**
DMRS-ANORDNUNGEN FÜR KOORDINIERTE MEHRPUNKTKOMMUNIKATION
CONFIGURATIONS DE DMRS POUR LA COMMUNICATION MULTIPOINT COORDONNÉE

(30) Priority: 04.11.2011 US 201113289118
(43) Date of publication of application: 10.09.2014
(73) Proprietor: Nokia Technologies Oy, 02610 Espoo (FI)
(72) Inventor: PAJUKOSKI, Kari, FI-90240 Oulu (FI); HOOLI, Kari, FI-90540 Oulu (FI); NISSILÄ, Mauri, 90540 Oulu (FI)
(74) Representative: Ruuskanen, Juha-Pekka
(86) International application number: PCT/FI2012/050930
(87) International publication number: WO 2013/064721

(56) References cited:
- WO-A1-2010/124716
- WO-A1-2011/005163
- WO-A1-2011/012087
- WO-A2-2009/023692
- WO-A2-2010/018977
- KR-A- 20110 112 005
- US-A1- 2008 298 433
- US-A1- 2010 067 512
- US-A1- 2011 176 502
- US-A1- 2011 235 682
- NOKIA SIEMENS NETWORKS ET AL: "Uplink DM RS from CoMP viewpoint", 3GPP DRAFT; R1-091760, 3RD GENERATION PARTNERSHIP PROJECT (3GPP), MOBILE COMPETENCE CENTRE, 28 April 2009 (2009-04-28), pages 1-5, XP050339285, SOPHIA-ANTIPOLIS CEDEX ; FRANCE [retrieved on 2009-04-28]
- NOKIA SIEMENS NETWORKS ET AL: "On Reference Signal Enhancements for UL CoMP", 3GPP DRAFT; R1-114324, 3RD GENERATION PARTNERSHIP PROJECT (3GPP), MOBILE COMPETENCE CENTRE, vol. RAN WG1, 8 November 2011 (2011-11-08) , pages 1-6, XP050562191, SOPHIA-ANTIPOLIS CEDEX ; FRANCE [retrieved on 2011-11-08]
- PANTECH: "Discussion on UL DM-RS enhancements for UL CoMP in Rel-11", 3GPP DRAFT; R1-113109, 3RD GENERATION PARTNERSHIP PROJECT (3GPP), MOBILE COMPETENCE CENTRE, vol. RAN WG1, 4 October 2011 (2011-10-04), pages 1-4, XP050538251, SOPHIA-ANTIPOLIS CEDEX ; FRANCE [retrieved on 2011-10-04]
- SAMSUNG: "UL DMRS Enhancements in Rel.11", 3GPP DRAFT; R1-112520 UL DMRS REL-11 V3, 3RD GENERATION PARTNERSHIP PROJECT (3GPP), MOBILE COMPETENCE CENTRE, vol. RAN WG1, 16 August 2011 (2011-08-16), XP050537600, SOPHIA-ANTIPOLIS CEDEX ; FRANCE [retrieved on 2011-08-16]

## Description

### TECHNICAL FIELD:

The exemplary and non-limiting embodiments of this invention relate generally to wireless communication systems, methods, devices and computer programs and, more specifically, relate to uplink reference signals.

### BACKGROUND

This section is intended to provide a background or context to the exemplary embodiments of the invention as recited in the claims. The description herein may include concepts that could be pursued, but are not necessarily ones that have been previously conceived, implemented or described. Therefore, unless otherwise indicated herein, what is described in this section is not prior art to the description and claims in this application and is not admitted to be prior art by inclusion in this section.

The following abbreviations that may be found in the specification and/or the drawing figures are defined as follows:
- 3GPP: third generation partnership project
- BS: base station
- BW: bandwidth
- CM: cubic metric
- CoMP: coordinated multi-point
- CQI: channel quality indication
- CRS: common reference signal
- CS: cyclic shift
- CSI: channel state information
- DCI: downlink control information
- DL: downlink (eNB towards UE)
- DMRS: demodulation reference signal
- eNB: E-UTRAN Node B (evolved Node B)
- EPC: evolved packet core
- E-UTRAN: evolved UTRAN (LTE)
- FDMA: frequency division multiple access
- HSPA: high speed packet access
- IFDM: interleaved frequency-division multiplexing
- IMT-A: international mobile telephony-advanced
- ITU: international telecommunication union
- ITU-R: ITU radiocommunication sector
- LTE: long term evolution of UTRAN (E-UTRAN)
- LTE-A: LTE advanced
- MAC: medium access control (layer 2, L2)
- MIMO: multiple input multiple output
- MM/MME: mobility management/mobility management entity
- MU-MIMO: multi-user multiple input multiple output
- Node B: base station
- OCC: orthogonal cover code
- OFDMA: orthogonal frequency division multiple access
- O&M: operations and maintenance
- PDCCH: packet downlink control channel
- PDCP: packet data convergence protocol
- PHY: physical (layer 1, L1)
- PMI: precoding matrix indication
- PRB: physical resource block
- PSS: primary synchronization signal
- PUCCH: physical uplink control channel
- PUSCH: physical uplink shared channel
- RANI: technical specification group radio access network working group 1
- Rel: release
- RLC: radio link control
- RRC: radio resource control
- RRH: remote radio head
- RRM: radio resource management
- S-GW: serving gateway
- SC-FDMA: single carrier, frequency division multiple access
- SSS: secondary synchronization signal
- TPMI: transmit precoding matrix index
- UE: user equipment, such as a mobile station, mobile node or mobile terminal
- UL: uplink (UE towards eNB)
- UTRAN: universal terrestrial radio access network
- ZC: Zadoff-Chu

The specification of a communication system known as evolved UTRAN (E-UTRAN, also referred to as UTRAN-LTE or as E-UTRA) is currently nearing completion within the 3GPP. As specified the DL access technique is OFDMA, and the UL access technique is SC-FDMA.

One specification of interest is 3GPP TS 36.300, V8.12.0 (2010-04), "3rd Generation Partnership Project; Technical Specification Group Radio Access Network; Evolved Universal Terrestrial Radio Access (E-UTRA) and Evolved Universal Terrestrial Access Network (E-UTRAN); Overall description; Stage 2 (Release 8)". This system may be referred to for convenience as LTE Rel-8 (which also contains 3G HSPA and its improvements). In general, the set of specifications given generally as 3GPP TS 36.xyz (e.g., 36.211, 36.311, 36.312, etc.) may be seen as describing the Release 8 LTE system. Release 9 versions of these specifications have been published, including 3GPP TS 36.300, V9.7.0 (2011-3). Release 10 versions of these specifications have been published, including 3GPP TS 36.300, V10.4.0 (2011-06).

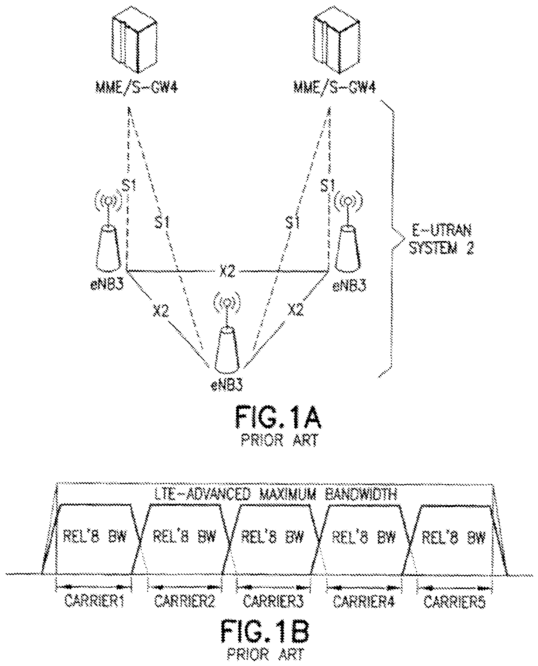

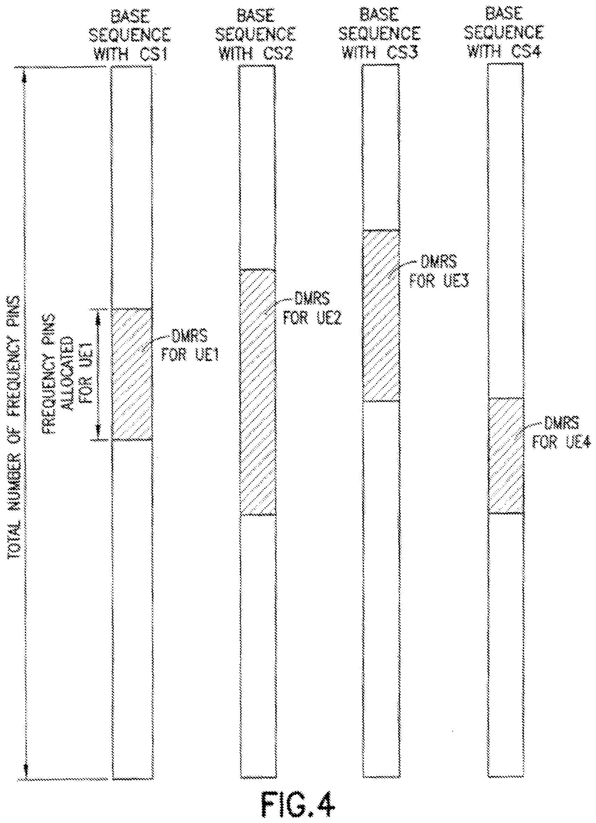

Figure 1 reproduces Figure 4-1 of 3GPP TS 36.300 V8.12.0, and shows the overall architecture of the E-UTRAN system 2 (Rel-8). The E-UTRAN system 2 includes eNBs 3, providing the E-UTRAN user plane (PDCP/RLC/MAC/PHY) and control plane (RRC) protocol terminations towards the UE (not shown). The eNBs 3 are interconnected with each other by means of an X2 interface. The eNBs 3 are also connected by means of an S1 interface to an EPC, more specifically to a MME by means of a S1 MME interface and to a S-GW by means of a S1 interface (MME/S-GW 4). The S1 interface supports a many-to-many relationship between MMEs / S-GWs and eNBs.

The eNB hosts the following functions:
- functions for RRM: RRC, Radio Admission Control, Connection Mobility Control, Dynamic allocation of resources to UEs in both UL and DL (scheduling);
- IP header compression and encryption of the user data stream;
- selection of a MME at UE attachment;
- routing of User Plane data towards the EPC (MME/S-GW);
- scheduling and transmission of paging messages (originated from the MME);
- scheduling and transmission of broadcast information (originated from the MME or O&M); and
- a measurement and measurement reporting configuration for mobility and scheduling.

Of particular interest herein are the further releases of 3GPP LTE (e.g., LTE Rel-10) targeted towards future IMT-A systems, referred to herein for convenience simply as LTE-Advanced (LTE-A). Reference in this regard may be made to 3GPP TR 36.913, V8.0.1 (2009-03), 3rd Generation Partnership Project; Technical Specification Group Radio Access Network; Requirements for Further Advancements for E-UTRA (LTE-Advanced) (Release 8). A goal of LTE-A is to provide significantly enhanced services by means of higher data rates and lower latency with reduced cost. LTE-A is directed toward extending and optimizing the 3GPP LTE Rel-8 radio access technologies to provide higher data rates at very low cost. LTE-A is part of LTE Rel-10. LTE-A is a more optimized radio system fulfilling the ITU-R requirements for IMT-A while maintaining backward compatibility with LTE Rel-8. Reference is further made to a Release 9 version of 3GPP TR 36.913, V9.0.0 (2009-12). Reference is also made to a Release 10 version of 3GPP TR 36.913, V10.0.0 (2011-06).

As is specified in 3GPP TR 36.913, LTE-A should operate in spectrum allocations of different sizes, including wider spectrum allocations than those of Rel-8 LTE (e.g., up to 100MHz) to achieve the peak data rate of 100Mbit/s for high mobility and 1 Gbit/s for low mobility. It has been agreed that carrier aggregation is to be considered for LTE-A in order to support bandwidths larger than 20 MHz. Carrier aggregation, where two or more component carriers (CCs) are aggregated, is considered for LTE-A in order to support transmission bandwidths larger than 20MHz. The carrier aggregation could be contiguous or non-contiguous. This technique, as a bandwidth extension, can provide significant gains in terms of peak data rate and cell throughput as compared to non-aggregated operation as in LTE Rel-8.

A terminal may simultaneously receive one or multiple component carriers depending on its capabilities. A LTE-A terminal with reception capability beyond 20 MHz can simultaneously receive transmissions on multiple component carriers. A LTE Rel-8 terminal can receive transmissions on a single component carrier only, provided that the structure of the component carrier follows the Rel-8 specifications. Moreover, it is required that LTE-A should be backwards compatible with Rel-8 LTE in the sense that a Rel-8 LTE terminal should be operable in the LTE-A system, and that a LTE-A terminal should be operable in a Rel-8 LTE system.

Figure 1B shows an example of the carrier aggregation, where M Rel-8 component carriers are combined together to form M×Rel-8 BW (e.g., 5 × 20MHz = 100MHz given M = 5). Rel-8 terminals receive/transmit on one component carrier, whereas LTE-A terminals may receive/transmit on multiple component carriers simultaneously to achieve higher (wider) bandwidths.

Coordinated Multi-point (CoMP) transmission is currently being investigated in 3GPP RANI. The motivation for CoMP is to allow fast coordination among different transmission points to improve coverage of high data rate, cell-edge throughput and/or to increase system throughput. To enable closed-loop transmission from multiple transmission points to a given UE, CSI for multiple radio links is measured by the UE and sent to the network using an uplink control channel (PUCCH) or an uplink data channel (PUSCH).

A UE in a CoMP scenario may be attached to a serving eNB and may communicate with that eNB for UL control (PUCCH), uplink data (PUSCH), and/or DL control (PDCCH) channels. For CoMP transmission, the UE can receive joint transmissions (PDSCH) from the serving eNB and/or one or more non-serving eNBs (e.g., from overlapping cells).

Uplink CoMP reception implies reception of the UE's transmitted signals at multiple geographically separated or co-located points (e.g., a single UE transmitting to multiple eNBs). In the DL direction where the eNB transmits data to the UE, DL CoMP transmission implies dynamic coordination among multiple geographically separated transmission points. Examples of DL CoMP schemes include coordinated beamforming where the data to a single UE is instantaneously transmitted from one of the transmission points and the scheduling decisions are coordinated to control, for example, the interference generated in a set of coordinated cells. In coordinated scheduling and coordinated beamforming, the data may only be available at a serving eNB and transmission scheduling may be coordinated among eNBs within the CoMP cooperating set.

In DL CoMP, the transmissions from multiple cells are coordinated so as to mitigate inter-cell interference among the cells at the UE. This type of operation requires CSI feedback from the UE to the eNB. The CSI feedback could take the form of, for example, a PMI or other form of CSI that allows weighting the eNB antennas in order to mitigate interference in the spatial domain. Typically the UE also needs to feedback CQI to allow proper link adaptation at the eNB, preferably taking into account the inter-cell coordination to reflect correct interference level after coordination. The CQI calculation at the UE requires not only estimating the downlink channels associated with the cooperating cells, which relates to the associated CSI (e.g. PMI), but also the interference level outside of the set of cooperating cells.

UE-specific reference signals (URS) (also known as a dedicated reference signal (DRS) or a demodulation reference signal (DMRS) within the context of LTE-A) were agreed to be used as the demodulation reference signal in the downlink of Rel-10 and Rel-9. These reference signals are present in the transmitted PRBs and the transmitted spatial layers. They undergo the same precoding operations as the corresponding data channel. Benefits of URSs include non-constrained precoding, no need for TPMI signaling in the DL and reduced overhead compared to non-precoded CRSs.

Reference is made to: 3GPP TR 36.814, v0.4.1, "Further Advancements for E-UTRA Physical Layer Aspects", February 2009; 3GPP WID RP-090359, "Enhanced DL transmission for LTE", March 2009; 3GPP R1-093890, "Considerations on Initialization and Mapping of DM-RS Sequence", Nokia Siemens Networks, Nokia, October 2009; 3GPP CR 0141R1, R1-095131, "CR 36.211 Introduction of enhanced dual layer transmission", November 2009; and 3GPP R1-093697, "Proposed Way forward on Rel-9 Dual-layer beamforming for TDD and FDD" August 2009.

Reference is further made to section 5.5.2 of the following three documents: 3GPP TS 36.211, V8.9.0, "3rd Generation Partnership Project; Technical specification Group Radio Access Network; Evolved Universal Terrestrial Radio Access (E-UTRA); Physical Channels and Modulation (Release 8)," December 2009; 3GPP TS 36.211, V9.1.0, "3rd Generation Partnership Project; Technical specification Group Radio Access Network; Evolved Universal Terrestrial Radio Access (E-UTRA); Physical Channels and Modulation (Release 9)," March 2010; and 3GPP TS 36.211, V10.2.0, "3rd Generation Partnership Project; Technical specification Group Radio Access Network; Evolved Universal Terrestrial Radio Access (E-UTRA); Physical Channels and Modulation (Release 10)," June 2011.

The performance of UL CoMP is heavily influenced by the quality of the channel estimates. On the other hand, it has been shown that the quality of the channel estimates can be greatly improved by an inter-cell orthogonal DMRS. The inter-cell orthogonal DMRS can be arranged in a number of ways. Already LTE Rel. 8 provides for inter-cell orthogonal DMRS by allowing for the assignment of a same DMRS sequence group to a number of neighboring cells. The DMRS sequences of different users can then be orthogonalized by applying different CSs to a common base sequence. However, this comes with a strict requirement on allowed scheduling allocations since inter-cell orthogonality can be guaranteed only if all CoMP users occupy exactly the same bandwidth.

It is also important that the UL DMRS fulfills other desirable characteristics such as: constant amplitude in the frequency domain, low CM in the time domain, and good autocorrelation and cross-correlation properties, as non-limiting examples. International patent application publication number WO 2010/124716 A1 relates to a system providing a multiple of communication points for communication devices in which at least two modes of communicating demodulation reference signals is provided.

United States patent application publication number US 2011/176502 A1 relates to a method for generating an uplink reference signal in a system supporting plural uplink-access transmission modes. The method comprises: a step for transmitting the reference signal configuration information about the configuration of a reference signal from a base station to a user device through an uplink grant PDCCH (Physical Downlink Control Channel), and a step for receiving from the user device a sub-frame including the reference signal that is generated based on the reference signal configuration information. The reference signal configuration information is prepared for plural uplink access transmission modes and includes a cyclic shift value for the sequence of the reference signal. The reference signal is supposed to be transmitted to an uplink, and the user device is set up to be operated in the uplink-access transmission mode that corresponding to the reference signal configuration information.

### SUMMARY:

The below summary section is intended to be merely exemplary and non-limiting.

The foregoing and other problems are overcome, and other advantages are realized, by the use of the exemplary embodiments of this invention.

The present invention is defined by the appended independent claims. Certain more specific aspects are defined by the dependent claims.

### BRIEF DESCRIPTION OF THE DRAWINGS:

The foregoing and other aspects of exemplary embodiments of this invention are made more evident in the following Detailed Description, when read in conjunction with the attached Drawing Figures, wherein:
Figure 1A reproduces Figure 4-1 of 3GPP TS 36.300 V8.12.0, and shows the overall architecture of the E-UTRAN system.
Figure 1B shows an example of carrier aggregation as proposed for the LTE-A system.
Figure 2A shows a simplified block diagram of various exemplary electronic devices that are suitable for use in practicing the examples.
Figure 2B shows a more particularized block diagram of an exemplary user equipment such as that shown in Figure 2A.
Figure 3 depicts an exemplary CoMP system within which the examples may be implemented.
Figure 4 shows an example of how four UEs with partially overlapping PRB allocations may obtain their respective UE-specific DMRS sequences.
Figure 5 is a logic flow diagram that illustrates the operation of an example method, and a result of execution of computer program instructions embodied on a computer readable memory.
Figure 6 is a logic flow diagram that illustrates the operation of another example method, and a result of execution of computer program instructions embodied on a computer readable memory.

### DETAILED DESCRIPTION:

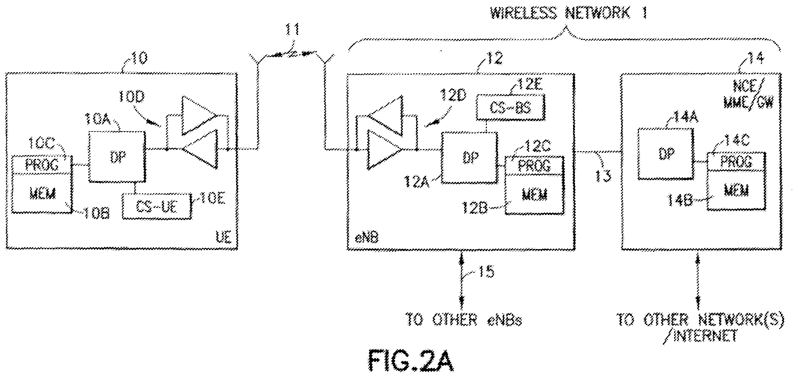

Before describing in further detail the examples, reference is made to Figure 2A for illustrating a simplified block diagram of various exemplary electronic devices and apparatus that are suitable for use in practicing the examples. In Figure 2A, a wireless network 1 is adapted for communication over a wireless link 11 with an apparatus, such as a mobile communication device which may be referred to as a user equipment (UE) 10, via a network access node, such as a Node B (base station), and more specifically an eNB 12. The network 1 may include a network control element (NCE) 14 that may include the MME/S-GW functionality shown in Figure 1, and which provides connectivity with one or more other networks, such as a telephone network and/or a data communications network (e.g., the Internet). The UE 10 includes a controller, such as a computer, processor or data processor (DP) 10A, a computer-readable memory medium embodied as a memory (MEM) 10B that stores a program of computer instructions (PROG) 10C, and a suitable radio frequency (RF) interface 10D for bidirectional wireless communications with the eNB 12 via one or more antennas.

The eNB 12 includes a controller, such as a computer, processor or data processor (DP) 12A, a computer-readable memory medium embodied as a memory (MEM) 12B that stores a program of computer instructions (PROG) 12C, and a suitable radio frequency (RF) interface 12D for communication with the UE 10 via one or more antennas. The eNB 12 is coupled via a data/control path 13 to the NCE 14. As a non-limiting example, the path 13 may be implemented as the S1 interface shown in Figure 1.

The NCE 14 includes a controller, such as a computer, processor or data processor (DP) 14A and a computer-readable memory medium embodied as a memory (MEM) 14B that stores a program of computer instructions (PROG) 14C. As noted above, the NCE 14 is coupled via a data/control path 13 to the eNB 12. The eNB 12 may also be coupled to one or more other eNBs via data/control path 15, which may be implemented as the X2 interface shown in Figure 1, for example.

The RF interface 10D, 12D of the UE 10 and/or eNB 12 may comprise one or more transmitters, one or more receivers and/or one or more transceivers, as non-limiting examples. In other examples, the RF interface 10D, 12D of the UE 10 and/or eNB 12 may comprise one or more wireless interfaces and/or one or more communication components configured to perform unidirectional and/or bidirectional wireless communication with one or more other apparatus and/or devices (e.g., to receive and/or transmit a plurality of communications from/to multiple eNBs in accordance with CoMP procedures).

At least one of the PROGs 10C and 12C is assumed to include program instructions that, when executed by the associated DP 10A, 12A, enable the respective device to operate in accordance with the examples, as will be discussed below in greater detail.

That is, the examples may be implemented at least in part by computer software executable by the DP 10A of the UE 10 and/or by the DP 12A of the eNB 12, or by hardware, or by a combination of software and hardware (and firmware).

For the purposes of describing the examples, the UE 10 may be assumed to also include a CS-UE processor 10E, and the eNB 12 may include a CS-BS processor 12E. As a non-limiting example, the CS-UE 10E may include at least one processor or processing component configured to apply a CS to a base sequence in order to obtain a UE-specific sequence to be used, in conjunction with a PRB assignment for the UE (e.g., for the PUSCH), to obtain a UE-specific DMRS sequence. As a non-limiting example, the CS-BS 12E may include at least one processor or processing component configured to assign a CS (e.g., from among a pool of CSs, from among a pool of available CSs, from among a pool of 12 possible CSs) to the UE 10.

In general, the various examples of the UE 10 can include, but are not limited to, mobile nodes, mobile stations, mobile phones, cellular phones, personal digital assistants (PDAs) having wireless communication capabilities, mobile routers, relay stations, relay nodes, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The MEMs 10B, 12B and 14B may be of any type suitable to the local technical environment and may be implemented using any suitable data storage technology, such as semiconductor-based memory devices, flash memory, magnetic memory devices and systems, optical memory devices and systems, fixed memory and removable memory, as non-limiting examples. The DPs 10A, 12A and 14A may be of any type suitable to the local technical environment, and may include one or more of general purpose computers, special purpose computers, microprocessors, digital signal processors (DSPs) and processors based on a multicore processor architecture, as non-limiting examples.

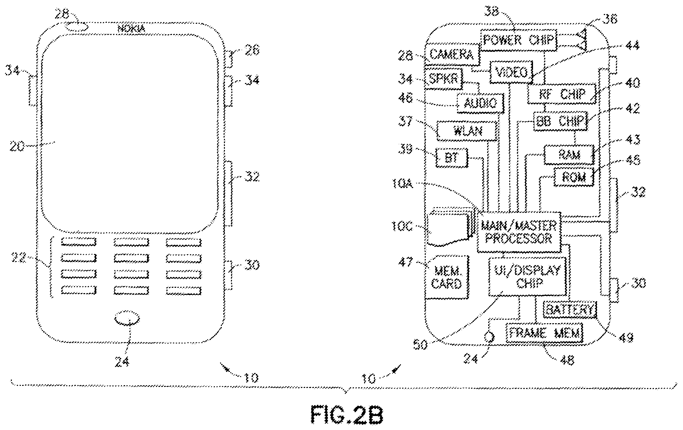

Figure 2B illustrates further detail of an exemplary UE 10 in both plan view (left) and sectional view (right). Examples may be embodied in one or more combinations that include one or more function-specific components, such as those shown in Figure 2B. As shown in Figure 2B, the UE 10 includes a graphical display interface 20, a user interface 22 comprising a keypad, a microphone 24 and speaker(s) 34. In further examples, the UE 10 may also encompass touch-screen technology at the graphical display interface 20 and/or voice-recognition technology for audio signals received at the microphone 24. A power actuator 26 controls the UE 10 being turned on and/or off by the user. The UE 10 may include a camera 28, which is shown as forward facing (e.g., for video calls) but may alternatively or additionally be rearward facing (e.g., for capturing images and video for local storage). The camera 28 may be controlled by a shutter actuator 30 and optionally by a zoom actuator 32, which may alternatively function as a volume adjustment for the speaker(s) 34 when the camera 28 is not in an active mode.

Within the sectional view of Figure 2B are seen multiple transmit/receive antennas 36 that are typically used for wireless communication (e.g., cellular communication). The antennas 36 may be multi-band for use with other radios in the UE. The operable ground plane for the antennas 36 is shown by shading as spanning the entire space enclosed by the UE housing, though in some examples the ground plane may be limited to a smaller area, such as disposed on a printed wiring board on which a power chip 38 is formed. The power chip 38 controls power amplification on the channels being transmitted on and/or across the antennas that transmit simultaneously, where spatial diversity is used, and amplifies received signals. The power chip 38 outputs the amplified received signal to the radio frequency (RF) chip 40, which demodulates and downconverts the signal for baseband processing. The baseband (BB) chip 42 detects the signal, which is then converted to a bit-stream and finally decoded. Similar processing occurs in reverse for signals generated in the UE 10 and transmitted from it.

Signals to and from the camera 28 pass through an image/video processor (video) 44, which encodes and decodes the image data (e.g., image frames). A separate audio processor 46 may also be present to control signals to and from the speakers (spkr) 34 and the microphone 24. The graphical display interface 20 is refreshed from a frame memory (frame mem) 48 as controlled by a user interface/display chip 50, which may process signals to and from the display interface 20 and/or additionally process user inputs from the keypad 22 and elsewhere.

Certain examples of the UE 10 may also include one or more secondary radios such as a wireless local area network radio (WLAN) 37 and/or a Bluetooth® radio (BT) 39, which may incorporate one or more on-chip antennas or be coupled to one or more off-chip antennas. Throughout the UE 10 are various memories, such as a random access memory (RAM) 43, a read only memory (ROM) 45, and, in some examples, a removable memory such as the illustrated memory card 47. In some examples, the various programs 10C are stored on the memory card 47. The components within the UE 10 may be powered by a portable power supply such as a battery 49.

The aforesaid processors 38, 40, 42, 44, 46, 50, if embodied as separate entities in the UE 10 or the eNB 12, may operate in a master-slave relationship with respect to the main/master processor 10A, 12A. Examples need not be disposed in a central location, but may instead be disposed across various chips and memories as shown or disposed within another processor that combines some of the functions described above for Figure 2B. Any or all of these various processors of Figure 2B may access one or more of the various memories, which may be on-chip with the processor or separate therefrom. Similar function-specific components that are directed toward communications over a network broader than a piconet (e.g., components 36, 38, 40, 42-45 and 47) may also be disposed in examples of the access node 12, which, in some examples, may include an array of tower-mounted antennas rather than the antennas 36 shown in Figure 2B.

Note that the various processors and/or chips (e.g., 38, 40, 42, etc.) described above may be combined into a fewer number of such processors and/or chips and, in a most compact case, may be embodied physically within a single processor or chip.

While described above in reference to memories, these components may generally be seen to correspond to one or more storage devices, storage circuits, storage components and/or storage blocks. In some examples, these components may comprise one or more computer-readable mediums, one or more computer-readable memories and/or one or more program storage devices.

While described above in reference to processors, these components may generally be seen to correspond to one or more processors, data processors, processing devices, processing components, processing blocks, circuits, circuit devices, circuit components, circuit blocks, integrated circuits and/or chips (e.g., chips comprising one or more circuits or integrated circuits).

Examples describe novel DMRS arrangements that, for example, provide inter-cell orthogonality for a CoMP arrangement or inter-user orthogonality for MU-MIMO within a cell without any scheduling restrictions caused by limitations from the DMRS orthogonality.

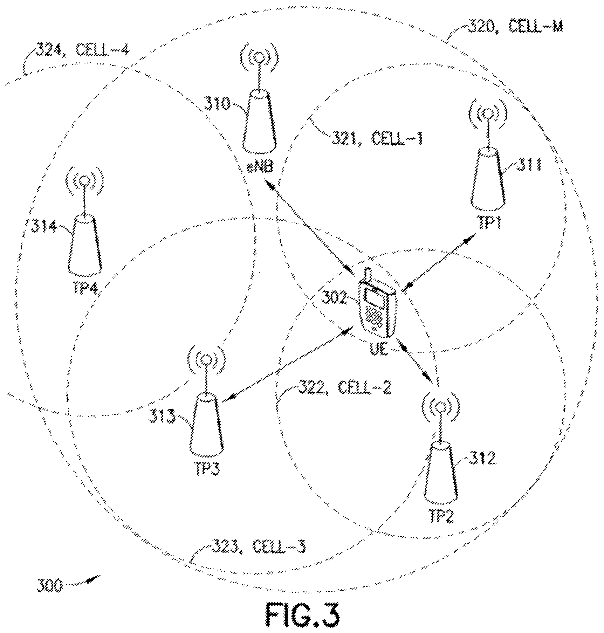

Figure 3 depicts an exemplary CoMP system 300 within which the examples may be implemented. The system 300 includes at least one UE 302 and at least one eNB 310 (e.g., a serving eNB for the UE 302). The eNB 310 defines a macro cell (cell-m) 320 of coverage. Within the macro cell 320 is at least one transmission point (TP1 311, TP2 312, TP3 313, TP4 314) coupled at least to the eNB 310 and, in some examples, to one another. Each transmission point defines a corresponding local cell of coverage (cell-1 321, cell-2 322, cell-3 323, cell-4 324) that may be entirely within the macro cell 320 or may overlap with a portion of the macro cell 320. As non-limiting examples, the transmission points may comprise RRHs or additional eNBs. In some examples, the transmission points are coupled to the eNB 310 to enable at least coordinated transmission to the UE 302. The one or more (at least one) local cells of coverage may also be referred to as hotspots, hotspot cells or local hotspots, as non-limiting examples.

The eNB 310 may be coupled to the at least one transmission point via at least one data and control path, which may be implemented as an X2 interface for the case of another logical base station or may be a direct eNB internal interface (e.g., an optical fiber connection) for connection to another type of transmission point such as at least one RRH, as non-limiting examples. Typically, the eNB 310 covers a single macro cell (cell-m 320) via one or more antennas.

The UE 302 is attached to the eNB 310 and communicates with the eNB 310 at least for UL control (PUCCH), uplink data (PUSCH), and DL control (PDCCH) channels. For CoMP reception, the UE 302 can receive a joint transmission (e.g., on a PDSCH) from any subset of eNB 310, TP1 311, TP2 312, TP3 313, and TP4 314. Note that a transmission point is defined as a co-located set of antennas. The transmission points may or may not be assigned a same cell-id. The transmission points may or may not belong to a same eNB (e.g., RRHs for eNB 310, a same serving eNB). As a non-limiting example, typically CoMP clusters are defined geographically to prevent and/or minimize overlap of macro cells or overlap of CoMP clusters, for example.

In some examples, each transmission point may include a controller, such as at least one data processor, at least one computer-readable memory medium (e.g., embodied as a memory) that stores a program of computer instructions, at least one suitable transmitter and at least one suitable receiver (e.g., at least one RF transceiver) operable for communication with the UE 302 via one or more antennas (typically several when MIMO operation is in use). In some examples, for single-cell operation the transmission points may be under complete control of a single eNB, although dispersed control is also possible. In further examples, there is generally a central unit to which several transmission points (e.g., RRHs) are connected. Thus, the transmission points and the macro eNB may be centrally controlled together. While the control is typically at the location of the macro eNB, in other examples it may be at a location that is connected to the eNB and/or the transmission points.

While discussed herein with respect to communication between a UE (e.g., UE 302) and an eNB (e.g., eNB 310), it should be understood that this is by way of convenience and for purposes of clarity, and thus should not be viewed as limiting the examples. In some examples, the UE may communicate with one or more transmission points, one or more transmission nodes, the eNB and/or any suitable combination thereof. Furthermore, any of these devices and/or logical entities may implement the examples as discussed herein. It should be appreciated that the examples described herein may be implemented for traditional macro-cell CoMP operation as well as operations having distributed antennas within a cell (e.g., enabled by RRHs).

Within the CoMP system 300 of Figure 3, a UE-specific DMRS may be signaled to the UE 302, for example, by the eNB 310. The UE-specific DMRS may be signaled in every UL grant. However, there also may be semi-persistent grants that have a longer valid time (e.g., the UE-specific DMRS sequence may persist for more than one UL grant and/or it may not be signaled in every UL grant).

In LTE Rel. 10, scheduling flexibility was improved by introducing the OCC, i.e., the orthogonal Hadamard code is applied in the time domain across two DMRS symbols in a subframe. This was mainly targeted to enhanced MU-MIMO operation within a cell. Since the dimension of OCC is only two, it is an insufficient solution for the UL CoMP where the CoMP cluster typically includes at least three cells. In addition, an IFDM has been proposed to increase the scheduling flexibility while, at the same time, providing orthogonality among the Rel. 11 and beyond CoMP users. One drawback associated with the IFDM solution is that its cross-correlation with legacy UEs is rather poor. Another drawback is that its processing gain against interference is reduced due to a shorter length of the sequences.

Examples utilize new arrangements for UL DMRS. Instead of using full length cyclically extended ZC sequences for allocated PRBs, examples suggest that a number of new sequences be defined for CoMP DMRS purposes with a length of the sequences being equal to or exceeding the system bandwidth (a total number of frequency pins). As non-limiting examples, these new sequences may comprise ZC sequences, extended ZC sequences, truncated ZC sequences and/or computer-searched sequences. One of these new sequences is allocated to a specific CoMP cluster at a time (e.g., each CoMP cluster), being a base sequence for the cluster. A group of orthogonal sequences for the cluster, each sequence having a length of at least the system bandwidth, is then obtained by applying a number of (e.g., up to 12) cyclic shifts to the base sequence. A CoMP UE in the CoMP cluster is assigned one of the orthogonal sequences in the CoMP cluster and derives its own DMRS sequence by taking a portion of the assigned sequence (e.g., a portion of the full length cyclically shifted version of the base sequence), for example, according to its PUSCH PRB allocation. Therefore, unlike the Rel 8 DMRS, the UE-specific DMRS in CoMP mode depends on the actual frequency location of the PUSCH PRB allocation of the UE, but is independent (as for each PRB) on the total number of PRBs allocated for the UE in a given subframe. CoMP UEs with overlapping PRB allocations are assigned to different CS values, thus ensuring that CoMP UEs within a CoMP cluster have orthogonal DMRS sequences irrespective of their PRB allocations.

A set of base sequences, where the length of each base sequence is greater than or equal to the total number of frequency pins in the assumed frequency carrier, is defined such that the full sequences, as well as their arbitrary subsequences, fulfill desired characteristics of the UL DMRS. As non-limiting examples, the desired characteristics may include one or more of the following: (i) the full sequences (e.g., the set of base sequences in use) and all of the arbitrary sequences (e.g., the cyclically-shifted base sequences) have a low peak to average ratio or CM; (ii) there is a low cross-correlation value between the full sequences and the arbitrary sequences; and/or (iii) there is a low cross-correlation value between sequences used in earlier releases (e.g., legacy sequences) and the full sequences and their arbitrary sequences.

In some examples, a limited subset of sequences is selected from a full set of available sequences of a given length, for example, by minimizing the maximum CM or average CM over the possible PRB allocations. One of these base sequences is assigned to each CoMP cluster, serving as a base sequence for that CoMP cluster. A CoMP cluster-specific set of full length (DMRS) sequences are obtained by applying different CSs to the base sequence. Each CoMP UE is assigned to one of the cluster-specific full length (DMRS) sequences and assumes a portion of that sequence according to its PUSCH PRB allocation as a UE-specific DMRS sequence. Thus, given a base sequence, the actual UE-specific DMRS sequence depends only on the frequency location of its PUSCH PRB allocation and a CS value assigned to the UE.

It is noted that different UEs can have overlapping PUSCH PRB assignments. As non-limiting example, this may occur when different UEs are allocated in different cells. As a further non-limiting example, this may also occur among UEs belonging to a same cell in the case of MU-MIMO.

Figure 4 shows an example of how four UEs (UE1-UE4) with partially overlapping PRB allocations may obtain their respective UE-specific DMRS sequences. Note that each UE is assigned a different CS of the base sequence for the CoMP cluster. In addition, the UE-specific DMRS is obtained based on each UE's PRB assignment (e.g., for the PUSCH). Since each CS of the base sequence is orthogonal, even though the UE PRB assignments overlap, the individual UE-specific DMRS sequences are orthogonal to one another.

As a further non-limiting example, consider the following simple numerical example. Suppose that a UE is assigned to the CoPM cluster-specific DMRS sequence (which is either the cluster-specific base sequence or a cyclically-shifted version) that is represented numerically by the sequence {1,2,3,...,1024}. Further assume that the PRB PUSCH allocation for that UE is for frequency pins {25,26,27,...,48}. The UE-specific DMRS sequence is thus represented simply by the sequence {25,26,27,...,48}.

As non-limiting examples, CoMP cluster-specific base sequences may be semi-statically set or they may be subject to either slot-based or subframe-based hopping. Time-domain OCC may be used to further improve orthogonality between UEs in the CoMP mode or to enable orthogonality between CoMP UEs and legacy UEs. In further examples, one or more parameters pertaining to the base sequence may be signaled to UEs semi-statically while CS and/or OCC parameters may be signaled dynamically via a DCI channel. As a non-limiting example, a UE capable of CoMP features may be assigned to the CoMP mode semi-statically or dynamically.

The above-described examples provide a number of advantages over the prior art. First, they provide for orthogonal DMRS sequences within the CoMP cluster with high scheduling flexibility. The sequences are simple to configure, essentially not requiring any increase in control signaling overhead. Moreover, the examples provide for good cross-correlation properties between DMRS sequences of CoMP UEs and legacy UEs.

While discussed above primarily in terms of a PUSCH PRB allocation, the examples are suitable for use in conjunction with other allocations and/or allocations on other channels (e.g., other UL channels, DL channels, other communication channels). As a non-limiting example, a DL channel allocation may be used. As a further non-limiting example, a PDCCH allocation may be used. As another non-limiting example, a PDSCH allocation may be used.

In some examples, the base sequences are known by the base station and/or the mobile device (e.g., UE) *a priori* (e.g., in advance, in advance such that the entire base sequence does not need to be signaled). As a non-limiting example, they may be specified in one or more standards and/or form a part of the communication protocol(s) in use. In such a manner, an indication of the base sequence (e.g., at least one identifier, at least one identification, at least one label, at least one index) may be signaled instead of the entire base sequence.

In further exemplary examples, the cyclic shifts are known by the base station and/or the mobile device (e.g., UE) *a priori* (e.g., in advance, in advance such that the entire cyclic shift (e.g., entirety of the information) does not need to be signaled). As a non-limiting example, they may be specified in one or more standards and/or form a part of the communication protocol(s) in use. In such a manner, an indication of the cyclic shift (e.g., at least one identifier, at least one identification, at least one label, at least one index) may be signaled instead of more detailed information.

In further exemplary examples of the invention, the indication of a base sequence may comprise at least a portion of the base sequence and/or an entirety of the base sequence. In other examples, the indication of a cyclic shift may comprise at least a portion of the cyclic shift (e.g., the cyclic shift value) and/or an entirety of the cyclic shift.

In some examples, twelve cyclic shifts are used. Since the dimension of OCC is two, in such examples at least 24 UEs may be supported per CoMP cluster. In further examples, it may be beneficial for reception points (e.g., transmission points and/or the serving eNB that are receiving signals/communication from a given UE) to know the DMRS sequence used for the corresponding transmitting UE. In such examples, the reception point(s) may calculate the UE-specific DMRS sequence and/or may be informed of the UE-specific DMRS sequence (e.g., via a communication from the UE, via a communication from the serving eNB), as non-limiting examples.

In some examples, the indication of a base sequence and the indication of a cyclic shift may be transmitted/received using one message and/or one communication. In further examples, the indication of a base sequence and the indication of a cyclic shift may be transmitted/received using at least two separate messages and/or at least two separate communications. As a non-limiting example, an applied cyclic shift may be defined as a combination of one or more of: a UE-specific value (e.g., indicated by UL grant or configuration of a semi-persistent allocation), a cell-specific offset (e.g., provided in or with system information), and/or a pseudorandom value determined using at least one of the cell ID (e.g., given by PSS and/or SSS), the frame number and/or the slot number. As a non-limiting example, three messages may be used (e.g., grant, system info and synchronization channels).

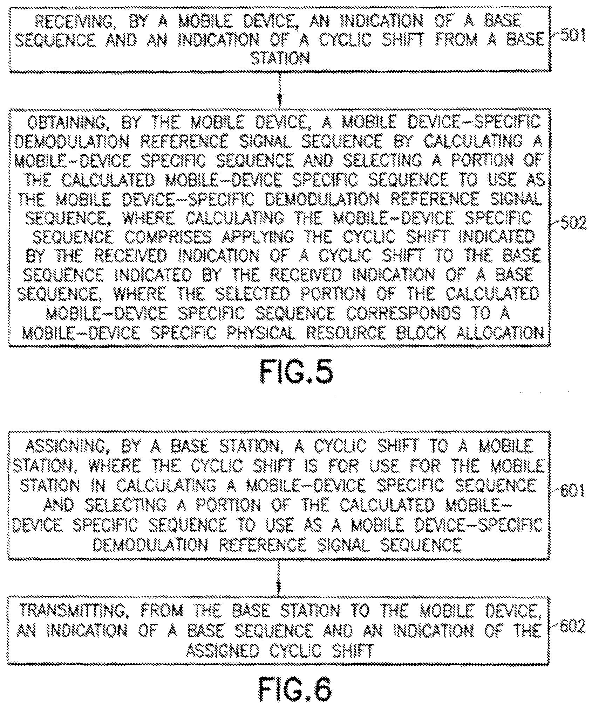

Below are provided further descriptions of various non-limiting, examples. The below-described examples are separately numbered for clarity and identification. This numbering should not be construed as wholly separating the below descriptions since various aspects of one or more examples may be practiced in conjunction with one or more other aspects or examples. That is, the examples, such as those described immediately below, may be implemented, practiced or utilized in any combination (e.g., any combination that is suitable, practicable and/or feasible) and are not limited only to those combinations described herein and/or included in the appended claims.
(1) In one exemplary example, and with reference to Figure 5, a method comprising: receiving, by a mobile device, an indication of a base sequence and an indication of a cyclic shift from a base station (501); and obtaining, by the mobile device, a mobile device-specific demodulation reference signal sequence by calculating a mobile-device specific sequence and selecting a portion of the calculated mobile-device specific sequence to use as the mobile device-specific demodulation reference signal sequence, where calculating the mobile-device specific sequence comprises applying the cyclic shift indicated by the received indication of a cyclic shift to the base sequence indicated by the received indication of a base sequence, where the selected portion of the calculated mobile-device specific sequence corresponds to a mobile-device specific physical resource block allocation (502).
   A method as above, where the indicated base sequence has a length greater than or equal to a total number of frequency pins for a system bandwidth. A method as in any above, where the mobile-device specific physical resource block allocation is for a physical uplink shared channel. A method as in any above, further comprising: transmitting, by the mobile device, a demodulation reference signal using the mobile device-specific demodulation reference signal sequence. A method as in any above, where the cyclic shift comprises one of a plurality of cyclic shifts, where each cyclic shift of the plurality of cyclic shifts is orthogonal to the other cyclic shifts. A method as in any above, where the cyclic shift is mobile-device specific within the coordinated multi-point cluster. A method as in any above, where the base sequence is unique to the coordinated multi-point cluster. A method as in any above, where the method is implemented using a computer program stored on a computer-readable medium.
   A method as in any above, where the indicated base sequence comprises at least one of: a Zadoff-Chu sequence, an extended Zadoff-Chu sequence, a truncated Zadoff-Chu sequence or a computer-searched sequence. A method as in any above, where a cyclic shift value for the cyclic shift indicated by the received indication of a cyclic shift is computed as: *c* = *n* (*b*/12), where c is the cyclic shift value, where *b* is a length of the base sequence indicated by the received indication of a base sequence, and where *n* is an integer such that 0 ≤ *n* ≤ 11 as determined by (e.g., based on) the received indication of a cyclic shift. A method as in any above, where the base station comprises one transmission node (e.g., transmission point, base station) of a plurality of transmission nodes (e.g., transmission points, base stations) within a coordinated multi-point cluster. A method as in any above, where the base station is operable to participate in multi-user multiple input multiple output communication with a plurality of mobile nodes (e.g., mobile devices, mobile phones, UEs).
   A method as in any above, where the indication of a base sequence and the indication of a cyclic shift are received in one message and/or one communication. A method as in any above, where the indication of a base sequence and the indication of a cyclic shift are received in at least one message and/or at least one communication. A method as in any above, where the indication of a base sequence and the indication of a cyclic shift are received in at least two separate messages and/or at least two separate communications.
   A method as in any above, implemented as (e.g., performed by) a computer program. A method as in any above, implemented as a computer program stored (e.g., tangibly embodied) on a computer-readable medium (e.g., a program storage device, a memory, non-transitory). A computer program comprising computer program instructions that, when loaded in a processor, perform operations according to one or more (e.g., any one) of the above-described methods. A method as in any above, implemented as a program of instructions tangibly embodied on a program storage device, execution of the program of instructions by a machine (e.g., a processor or a data processor) resulting in operations comprising the steps of the method. A method as in any above, further comprising one or more aspects of the examples as described elsewhere herein, and, in particular, one or more aspects of the example as relating to examples described herein.
(2) In another example, a program storage device (e.g., a computer-readable medium, a non-transitory computer-readable medium, a tangible computer-readable medium) readable by a machine (e.g., a mobile device, a mobile node, a mobile phone, a UE, a processor, a data processor, a processor of a mobile device), tangibly embodying a program of instructions executable by the machine for performing operations, said operations comprising: receiving, by a mobile device, an indication of a base sequence and an indication of a cyclic shift from a base station (501); and obtaining, by the mobile device, a mobile device-specific demodulation reference signal sequence by calculating a mobile-device specific sequence and selecting a portion of the calculated mobile-device specific sequence to use as the mobile device-specific demodulation reference signal sequence, where calculating the mobile-device specific sequence comprises applying the cyclic shift indicated by the received indication of a cyclic shift to the base sequence indicated by the received indication of a base sequence, where the selected portion of the calculated mobile-device specific sequence corresponds to a mobile-device specific physical resource block allocation (502).
   A program storage device as in any above, wherein the program storage device comprises a computer-readable medium, a computer-readable memory, a memory, a memory card, a removable memory, a storage device, a storage component and/or a storage circuit. A program storage device as in any above, further comprising one or more aspects of the examples as described elsewhere herein, and, in particular, one or more aspects of the examples as relating to example methods described herein.
(3) In another example, an apparatus comprising: at least one processor; and at least one memory including computer program code, the at least one memory and the computer program code being configured to, with the at least one processor, cause the apparatus at least to perform: at least one processor; and at least one memory including computer program code, the at least one memory and the computer program code being configured to, with the at least one processor, cause the apparatus at least to perform: receive an indication of a base sequence and an indication of a cyclic shift from a base station; and obtain a mobile device-specific demodulation reference signal sequence by calculating a mobile-device specific sequence and selecting a portion of the calculated mobile-device specific sequence to use as the mobile device-specific demodulation reference signal sequence, where calculating the mobile-device specific sequence comprises applying the cyclic shift indicated by the received indication of a cyclic shift to the base sequence indicated by the received indication of a base sequence, where the selected portion of the calculated mobile-device specific sequence corresponds to a mobile-device specific physical resource block allocation.
   An apparatus as in any above, where the apparatus comprises a mobile device. An apparatus as in any above, where the apparatus comprises the mobile device. An apparatus as in any above, where the apparatus comprises a mobile phone. An apparatus as in any above, further comprising one or more aspects of the examples as described elsewhere herein, and, in particular, one or more aspects of the examples as relating to example apparatus described herein.
(4) In another example, an apparatus comprising: means for receiving (e.g., at least one receiver, at least one transceiver, at least one antenna) an indication of a base sequence and an indication of a cyclic shift from a base station; and means for obtaining (e.g., at least one controller, at least one processor, at least one data processor, at least one microprocessor) a mobile device-specific demodulation reference signal sequence by calculating a mobile-device specific sequence and selecting a portion of the calculated mobile-device specific sequence to use as the mobile device-specific demodulation reference signal sequence, where calculating the mobile-device specific sequence comprises applying the cyclic shift indicated by the received indication of a cyclic shift to the base sequence indicated by the received indication of a base sequence, where the selected portion of the calculated mobile-device specific sequence corresponds to a mobile-device specific physical resource block allocation.
   An apparatus as in any above, where the apparatus comprises a mobile device. An apparatus as in any above, where the apparatus comprises the mobile device. An apparatus as in any above, where the apparatus comprises a mobile phone. An apparatus as in any above, further comprising one or more aspects of the examples as described elsewhere herein, and, in particular, one or more aspects of the examples as relating to example apparatus described herein.
(5) In another example, an apparatus comprising: reception circuitry configured to receive an indication of a base sequence and an indication of a cyclic shift from a base station; and processing circuitry configured to obtain a mobile device-specific demodulation reference signal sequence by calculating a mobile-device specific sequence and selecting a portion of the calculated mobile-device specific sequence to use as the mobile device-specific demodulation reference signal sequence, where calculating the mobile-device specific sequence comprises applying the cyclic shift indicated by the received indication of a cyclic shift to the base sequence indicated by the received indication of a base sequence, where the selected portion of the calculated mobile-device specific sequence corresponds to a mobile-device specific physical resource block allocation.
   An apparatus as in any above, where the apparatus comprises a mobile device. An apparatus as in any above, where the apparatus comprises the mobile device. An apparatus as in any above, where the apparatus comprises a mobile phone. An apparatus as in any above, further comprising one or more aspects of the examples as described elsewhere herein, and, in particular, one or more aspects of the examples as relating to example apparatus described herein.
(6) In another example, an apparatus comprising: at least one receiver configured to receive an indication of a base sequence and an indication of a cyclic shift from a base station; and at least one processor configured to obtain a mobile device-specific demodulation reference signal sequence by calculating a mobile-device specific sequence and selecting a portion of the calculated mobile-device specific sequence to use as the mobile device-specific demodulation reference signal sequence, where calculating the mobile-device specific sequence comprises applying the cyclic shift indicated by the received indication of a cyclic shift to the base sequence indicated by the received indication of a base sequence, where the selected portion of the calculated mobile-device specific sequence corresponds to a mobile-device specific physical resource block allocation.
   An apparatus as in any above, where the apparatus comprises a mobile device. An apparatus as in any above, where the apparatus comprises the mobile device. An apparatus as in any above, where the apparatus comprises a mobile phone. An apparatus as in any above, further comprising one or more aspects of the examples as described elsewhere herein, and, in particular, one or more aspects of the examples as relating to example apparatus described herein.
(7) In one example, and with reference to Figure 6, a method comprising: assigning, by a base station, a cyclic shift to a mobile station, where the cyclic shift is for use for (e.g., by) the mobile station in calculating a mobile-device specific sequence and selecting a portion of the calculated mobile-device specific sequence to use as a mobile device-specific demodulation reference signal sequence (601); and transmitting, from the base station to the mobile device, an indication of a base sequence and an indication of the assigned cyclic shift (602).
   A method as above, where the indicated base sequence has a length greater than or equal to a total number of frequency pins for a system bandwidth. A method as in any above, further comprising: receiving, by the base station, the indication of the base sequence from the network. A method as in any above, further comprising: receiving, by the base station, a demodulation reference signal using the mobile device-specific demodulation reference signal sequence from the mobile device. A method as in any above, where the mobile-device specific sequence is calculated by applying the cyclic shift indicated by the received indication of the assigned cyclic shift to the base sequence indicated by the received indication of a base sequence. A method as in any above, where the selected portion of the calculated mobile-device specific sequence corresponds to a mobile-device specific physical resource block allocation. A method as in any above, where the mobile-device specific physical resource block allocation is for a physical uplink shared channel. A method as in any above, where the method is implemented using a computer program stored on a computer-readable medium.
   A method as in any above, where the indicated base sequence comprises at least one of: a Zadoff-Chu sequence, an extended Zadoff-Chu sequence, a truncated Zadoff-Chu sequence or a computer-searched sequence. A method as in any above, where a cyclic shift value for the cyclic shift indicated by the indication of a cyclic shift is computed as: *c* = *n* (*b*/12), where c is the cyclic shift value, where *b* is a length of the base sequence indicated by the indication of a base sequence, and where *n* is an integer such that 0 ≤ *n* ≤ 11 as determined by (e.g., based on) the indication of a cyclic shift. A method as in any above, where the base station comprises one transmission node (e.g., transmission point, base station) of a plurality of transmission nodes (e.g., transmission points, base stations) within a coordinated multi-point cluster. A method as in any above, where the base station is operable to participate in multi-user multiple input multiple output communication with a plurality of mobile nodes (e.g., mobile devices, mobile phones, UEs).
   A method as in any above, where the indication of a base sequence and the indication of a cyclic shift are transmitted in one message and/or one communication. A method as in any above, where the indication of a base sequence and the indication of a cyclic shift are transmitted in at least one message and/or at least one communication. A method as in any above, where the indication of a base sequence and the indication of a cyclic shift are transmitted in at least two separate messages and/or at least two separate communications.
   A method as in any above, implemented as (e.g., performed by) a computer program. A method as in any above, implemented as a computer program stored (e.g., tangibly embodied) on a computer-readable medium (e.g., a program storage device, a memory, non-transitory). A computer program comprising computer program instructions that, when loaded in a processor, perform operations according to one or more (e.g., any one) of the above-described methods. A method as in any above, implemented as a program of instructions tangibly embodied on a program storage device, execution of the program of instructions by a machine (e.g., a processor or a data processor) resulting in operations comprising the steps of the method. A method as in any above, further comprising one or more aspects of the examples as described elsewhere herein, and, in particular, one or more aspects of the examples as relating to example methods described herein.
(8) In another example, a program storage device (e.g., a computer-readable medium, a non-transitory computer-readable medium, a tangible computer-readable medium) readable by a machine (e.g., a base station, a processor, a data processor, a processor of a base station), tangibly embodying a program of instructions executable by the machine for performing operations, said operations comprising: assigning, by a base station, a cyclic shift to a mobile station, where the cyclic shift is for use for (e.g., by) the mobile station in calculating a mobile-device specific sequence and selecting a portion of the calculated mobile-device specific sequence to use as a mobile device-specific demodulation reference signal sequence (601); and transmitting, from the base station to the mobile device, an indication of a base sequence and an indication of the assigned cyclic shift (602).
   A program storage device as in any above, wherein the program storage device comprises a computer-readable medium, a computer-readable memory, a memory, a memory card, a removable memory, a storage device, a storage component and/or a storage circuit. A program storage device as in any above, further comprising one or more aspects of the examples as described elsewhere herein, and, in particular, one or more aspects of the examples as relating to example methods described herein.
(9) In another example, an apparatus comprising: at least one processor; and at least one memory including computer program code, the at least one memory and the computer program code being configured to, with the at least one processor, cause the apparatus at least to perform: assign a cyclic shift to a mobile station, where the cyclic shift is for use for (e.g., by) the mobile station in calculating a mobile-device specific sequence and selecting a portion of the calculated mobile-device specific sequence to use as a mobile device-specific demodulation reference signal sequence; and transmit, to the mobile device, an indication of a base sequence and an indication of the assigned cyclic shift.
   An apparatus as in any above, where the apparatus comprises a base station. An apparatus as in any above, where the apparatus comprises an evolved Node B. An apparatus as in any above, further comprising one or more aspects of the examples as described elsewhere herein, and, in particular, one or more aspects of the examples as relating to example apparatus described herein.
(10) In another example, an apparatus comprising: means for assigning (e.g., at least one controller, at least one processor, at least one data processor, at least one microprocessor) a cyclic shift to a mobile station, where the cyclic shift is for use for (e.g., by) the mobile station in calculating a mobile-device specific sequence and selecting a portion of the calculated mobile-device specific sequence to use as a mobile device-specific demodulation reference signal sequence; and means for transmitting (e.g., at least one transmitter, at least one transceiver, at least one antenna), to the mobile device, an indication of a base sequence and an indication of the assigned cyclic shift.
   An apparatus as in any above, where the apparatus comprises a base station. An apparatus as in any above, where the apparatus comprises an evolved Node B. An apparatus as in any above, further comprising one or more aspects of the examples as described elsewhere herein, and, in particular, one or more aspects of the examples as relating to example apparatus described herein.
(11) In another example, an apparatus comprising: assignment circuitry configured to assign a cyclic shift to a mobile station, where the cyclic shift is for use for (e.g., by) the mobile station in calculating a mobile-device specific sequence and selecting a portion of the calculated mobile-device specific sequence to use as a mobile device-specific demodulation reference signal sequence; and transmission circuitry configured to transmit, to the mobile device, an indication of a base sequence and an indication of the assigned cyclic shift.
   An apparatus as in any above, where the apparatus comprises a base station. An apparatus as in any above, where the apparatus comprises an evolved Node B. An apparatus as in any above, further comprising one or more aspects of the examples as described elsewhere herein, and, in particular, one or more aspects of the examples as relating to example apparatus described herein.
(12) In another example, an apparatus comprising: at least one processor configured to assign a cyclic shift to a mobile station, where the cyclic shift is for use for (e.g., by) the mobile station in calculating a mobile-device specific sequence and selecting a portion of the calculated mobile-device specific sequence to use as a mobile device-specific demodulation reference signal sequence; and at least one transmitter configured to transmit, to the mobile device, an indication of a base sequence and an indication of the assigned cyclic shift.
   An apparatus as in any above, where the apparatus comprises a base station. An apparatus as in any above, where the apparatus comprises an evolved Node B. An apparatus as in any above, further comprising one or more aspects of the examples as described elsewhere herein, and, in particular, one or more aspects of the examples as relating to example apparatus described herein.
(13) In another example, a system comprising: a mobile device as in any one of (1)-(6); and a base station as in any one of (7)-(12).

An system as in any above, further comprising one or more aspects of the examples as described elsewhere herein, and, in particular, one or more aspects of the examples as relating to example apparatus described herein.

The examples, as discussed above and as particularly described with respect to exemplary methods, may be implemented as a computer program product comprising program instructions embodied on a tangible computer-readable medium. Execution of the program instructions results in operations comprising steps of utilizing the example or steps of the method.

The examples, as discussed above and as particularly described with respect to example methods, may be implemented in conjunction with a program storage device (e.g., a computer-readable medium, a memory) readable by a machine (e.g., a computer, a mobile station, a mobile device, a mobile node), tangibly embodying a program of instructions (e.g., a program, a computer program) executable by the machine (e.g., by a processor, by a processor of the machine) for performing operations. The operations comprise steps of utilizing the example or steps of the method.

The various blocks shown in Figures 5 and 6 may be viewed as method steps, as operations that result from operation of computer program code and/or as one or more coupled components (e.g., function blocks, circuits, integrated circuits, logic circuit elements) constructed to carry out the associated function(s). The blocks may also be considered to correspond to one or more functions and/or operations that are performed by one or more components, apparatus, processors, computer programs, circuits, integrated circuits, application-specific integrated circuits (ASICs), chips and/or function blocks. Any and/or all of the above may be implemented in any practicable arrangement or solution that enables operation in accordance with the examples.

Furthermore, the arrangement of the blocks shown in Figures 5 and 6 should be considered merely exemplary and non-limiting. It should be appreciated that the blocks may correspond to one or more functions and/or operations that may be performed in any order (e.g., any practicable, suitable and/or feasible order) and/or concurrently (e.g., as practicable, suitable and/or feasible) so as to implement one or more of the examples. In addition, one or more additional steps, functions and/or operations may be utilized in conjunction with those illustrated in Figures 5 and 6 so as to implement one or more further examples, such as those described in further detail herein.

That is, the non-limiting examples shown in Figures 5 and 6 may be implemented, practiced or utilized in conjunction with one or more further aspects in any combination (e.g., any combination that is practicable, suitable and/or feasible) and are not limited only to the blocks, steps, functions and/or operations illustrated in Figures 5 and 6.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein, two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical region (both visible and invisible), as several non-limiting and non-exhaustive examples.

It should be noted that the term "mobile device-specific," or any variant thereof, means that the identified item is unique to that mobile device (e.g., among other such mobile devices) at least for a given region of the system (e.g., within the particular macro cell or within the particular CoMP cluster).

In general, the various examples may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the examples may be illustrated and described as block diagrams, flow charts, or using some other pictorial representation, it is well understood that these blocks, apparatus, systems, techniques or methods described herein may be implemented in, as nonlimiting examples, hardware, software, firmware, special purpose circuits or logic, general purpose hardware or controller or other computing devices, or some combination thereof.

It should thus be appreciated that at least some aspects of the examples may be practiced in various components such as integrated circuit chips and modules, and that the examples may be realized in an apparatus that is embodied as an integrated circuit. The integrated circuit, or circuits, may comprise circuitry (as well as possibly firmware) for embodying at least one or more of a data processor or data processors, a digital signal processor or processors, baseband circuitry and radio frequency circuitry that are configurable so as to operate in accordance with the examples.

The examples may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

As such, it should be appreciated that at least some aspects of the examples may be practiced in various components such as integrated circuit chips and modules. It should thus be appreciated that the examples may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the examples.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the invention. However, various modifications and adaptations may become apparent to those skilled in the relevant arts in view of the foregoing description, when read in conjunction with the accompanying drawings and the appended claims. As a non-limiting example, while described above with respect to a PRB allocation for the UE, the examples may be utilized in conjunction with any suitable UE allocation, whether or not it is based on PRBs or some other resource or divisions (e.g., units). However, all such and similar modifications of the teachings of this invention will still fall within the scope of the non-limiting examples.

As another example, while the examples have been described above in the context of the E-UTRAN (UTRAN-LTE) and LTE-A system(s), it should be appreciated that the examples are not limited for use with only this/these particular types of wireless communication system, and that they may be used to advantage in other wireless communication systems.

Furthermore, some of the features of the various non-limiting examples may be used to advantage without the corresponding use of other features. As such, the foregoing description should be considered as merely illustrative of the principles, teachings and examples, and not in limitation thereof.

## Claims

1. A method, comprising:
receiving (501), by a mobile device, an indication of a base sequence and an indication of a cyclic shift from a base station;
obtaining (502), by the mobile device, a mobile device-specific demodulation reference signal sequence by:
calculating a mobile device-specific sequence by applying the cyclic shift indicated by the received indication of a cyclic shift to the base sequence indicated by the received indication of a base sequence; and
selecting a portion of the calculated mobile device-specific sequence to use as the mobile device-specific demodulation reference signal sequence in dependence on a mobile device-specific physical resource block allocation.

2. The method of claim 1, where the indicated base sequence comprises at least one of: a Zadoff-Chu sequence, an extended Zadoff-Chu sequence, a truncated Zadoff-Chu sequence or a computer-searched sequence.

3. The method of any one of claims 1-2, where a cyclic shift value for the cyclic shift indicated by the received indication of a cyclic shift is computed as: *c* = *n* (*b*/12), where *c* is the cyclic shift value, where *b* is a length of the base sequence indicated by the received indication of a base sequence, and where *n* is an integer such that 0 ≤ *n* ≤ 11 as determined by the received indication of a cyclic shift.

4. The method of any one of claims 1-3, where the indicated base sequence has a length greater than or equal to a total number of frequency pins for a system bandwidth.

5. The method of any one of claims 1-4, where the mobile device-specific physical resource block allocation is for a physical uplink shared channel.

6. The method of any one of claims 1-5, further comprising: transmitting, by the mobile device, a demodulation reference signal using the mobile device-specific demodulation reference signal sequence.

7. The method of any one of claims 1-6, where the cyclic shift comprises one of a plurality of cyclic shifts, where each cyclic shift of the base sequence of the plurality of cyclic shifts is orthogonal to the other cyclic shifts of the base sequence.

8. An apparatus comprising:
means for receiving (501) an indication of a base sequence and an indication of a cyclic shift from a base station;
means for obtaining (502) a mobile device-specific demodulation reference signal sequence by:
calculating a mobile device-specific sequence by applying the cyclic shift indicated by the received indication of a cyclic shift to the base sequence indicated by the received indication of a base sequence; and
selecting a portion of the calculated mobile device-specific sequence to use as the mobile device-specific demodulation reference signal sequence in dependence on a mobile device-specific physical resource block allocation.

9. A method, comprising:
assigning (601), by a base station, a cyclic shift to a mobile device;
transmitting (602), from the base station to the mobile device, an indication of a base sequence and an indication of the assigned cyclic shift; and
receiving, by the base station, a demodulation reference signal using a mobile device-specific demodulation reference signal sequence from the mobile device, wherein the mobile device-specific demodulation reference signal sequence is a portion of a mobile device-specific sequence that is dependent on the cyclic shift and wherein the portion is dependent on a mobile device-specific physical resource block allocation.

10. The method of claim 9, where the indicated base sequence has a length greater than or equal to a total number of frequency pins for a system bandwidth.

11. The method of any one of claims 9-10, further comprising: receiving, by the base station, the indication of the base sequence from the network.

12. The method of any one of claims 9-11, where a cyclic shift value for the cyclic shift indicated by the indication of a cyclic shift is computed as: *c* = *n* (*b*/12), where c is the cyclic shift value, where *b* is a length of the base sequence indicated by the indication of a base sequence, and where *n* is an integer such that 0 ≤ *n* ≤ 11 as determined by the indication of a cyclic shift.

13. The method of any one of claims 9-12, where the selected portion of the calculated mobile device-specific sequence corresponds to a mobile device-specific physical resource block allocation.

14. An apparatus comprising:
means for assigning (601) a cyclic shift to a mobile device;
means for transmitting (602), to the mobile device, an indication of a base sequence and an indication of the assigned cyclic shift; and
means for receiving a demodulation reference signal using a mobile device-specific demodulation reference signal sequence from the mobile device, wherein the mobile device-specific demodulation reference signal sequence is a portion of a mobile device-specific sequence that is dependent on the cyclic shift and wherein the portion is dependent on a mobile device-specific physical resource block allocation.

## Patentansprüche

1. Verfahren, umfassend:
Empfangen (501) in einem Mobilgerät eines von einer Basisstation kommenden Hinweises auf eine Basisfolge und eines Hinweises auf eine zyklische Verschiebung;
Erhalten (502) einer mobilgerätspezifischen Demodulations-Referenzsignalfolge im Mobilgerät durch:
Berechnen einer mobilgerätspezifischen Folge durch Anwenden der zyklischen Verschiebung, die durch den erhaltenen Hinweis auf eine zyklische Verschiebung angegeben wurde, zur Basisfolge, die durch den erhaltenen Hinweis auf eine Basisfolge angegeben wurde; und
Auswählen eines Abschnitts der berechneten mobilgerätspezifischen Folge zur Verwendung als mobilgerätspezifische Demodulations-Referenzsignalfolge in Abhängigkeit von einer mobilgerätspezifischen physischen Ressourcenblockzuweisung.

2. Verfahren nach Anspruch 1, wobei die angegebene Basisfolge zumindest eine der nachstehenden umfasst: eine Zadoff-Chu-Folge, eine erweiterte Zadoff-Chu-Folge, eine gekürzte Zadoff-Chu-Folge oder eine rechnergesuchte Folge.

3. Verfahren nach einem der Ansprüche 1 bis 2, wobei ein zyklischer Verschiebungswert für die zyklische Verschiebung, die durch den erhaltenen Hinweis auf eine zyklische Verschiebung angegeben wurde, berechnet wird als: c *= n (b*/*12),* wobei c der zyklische Verschiebungswert ist, wobei b eine Länge der Basisfolge ist, die durch den erhaltenen Hinweis auf eine Basisfolge angegeben wurde, und wobei *n* eine ganze Zahl ist, so dass 0 ≤ *n* ≤ 11, wie durch den empfangenen Hinweis auf eine zyklische Verschiebung bestimmt ist.

4. Verfahren nach einem beliebigen der vorstehenden Ansprüche 1 bis 3, wobei die angegebene Basisfolge eine Länge hat, die größer oder gleich einer Gesamtzahl der Frequenzpins für eine Systembandbreite ist.

5. Verfahren nach einem beliebigen der vorstehenden Ansprüche 1 bis 4, wobei die mobilgerätspezifische physische Ressourcenblockzuweisung für einen geteilten physischen Uplink-Kanal erfolgt.

6. Verfahren nach einem beliebigen der vorstehenden Ansprüche 1 bis 5, ferner umfassend: Übertragen eines Demodulations-Referenzsignals durch das Mobilgerät unter Verwendung der mobilgerätspezifischen Demodulations-Referenzsignalfolge.

7. Verfahren nach einem beliebigen der vorstehenden Ansprüche 1 bis 6, wobei die zyklische Verschiebung eine von einer Mehrzahl von zyklischen Verschiebungen umfasst, wobei jede zyklische Verschiebung der Basisfolge der Mehrzahl von zyklischen Verschiebungen orthogonal zu den anderen zyklischen Verschiebungen der Basisfolge ist.

8. Vorrichtung umfassend:
Mittel zum Empfangen (501) eines Hinweises auf eine Basisfolge und eines Hinweises auf eine zyklische Verschiebung von einer Basisstation;
Mittel zum Erhalten (502) einer mobilgerätspezifischen Demodulations-Referenzsignalfolge durch:
Berechnen einer mobilgerätspezifischen Folge durch Anwenden der zyklischen Verschiebung, die durch den erhaltenen Hinweis auf eine zyklische Verschiebung angegeben wurde, zur Basisfolge, die durch den erhaltenen Hinweis auf eine Basisfolge angegeben wurde; und
Auswählen eines Abschnitts der berechneten mobilgerätspezifischen Folge zur Verwendung als mobilgerätspezifische Demodulations-Referenzsignalfolge in Abhängigkeit von einer mobilgerätspezifischen physischen Ressourcenblockzuweisung.

9. Verfahren, umfassend:
Zuweisen (601) einer zyklischen Verschiebung zu einem Mobilgerät durch eine Basisstation;
Übertragen (602) eines Hinweises auf eine Basisfolge und eines Hinweises auf die zugewiesene zyklische Verschiebung von der Basisstation an das Mobilgerät; und
Empfangen eines Demodulations-Referenzsignals durch die Basisstation unter Verwendung einer mobilgerätspezifischen Demodulations-Referenzsignalfolge vom Mobilgerät, wobei die mobilgerätspezifische Demodulations-Referenzsignalfolge ein Abschnitt einer mobilgerätspezifischen Folge ist, die von der zyklischen Verschiebung abhängt, und wobei der Abschnitt von einer mobilgerätspezifischen physischen Ressourcenblockzuweisung abhängt.

10. Verfahren nach Anspruch 9, wobei die angegebene Basisfolge eine Länge hat, die größer oder gleich einer Gesamtanzahl von Frequenzpins für eine Systembandbreite ist.

11. Verfahren nach einem der Ansprüche 9 bis 10, ferner umfassend: Empfangen des Hinweises auf die Basisfolge aus dem Netz durch die Basisstation.

12. Verfahren nach einem beliebigen der vorstehenden Ansprüche 9 bis 11, wobei ein zyklischer Verschiebungswert für die zyklische Verschiebung, die durch den Hinweis auf eine zyklische Verschiebung angegeben wurde, berechnet wird als: *c = n (b*/*12),* wobei c der zyklische Verschiebungswert ist, wobei b eine Länge der Basisfolge ist, die durch den Hinweis auf eine Basisfolge angegeben wurde, und wobei *n* eine ganze Zahl ist, so dass 0 ≤ *n* ≤ 11 wie durch den Hinweis auf eine zyklische Verschiebung bestimmt ist.

13. Verfahren nach einem beliebigen der vorstehenden Ansprüche 9 bis 12, wobei der gewählte Abschnitt der berechneten mobilgerätspezifischen Folge einer mobilgerätspezifischen physischen Ressourcenblockzuweisung entspricht.

14. Vorrichtung umfassend:
Mittel zum Zuweisen (601) einer zyklischen Verschiebung an ein Mobilgerät;
Mittel zum Übertragen (602) eines Hinweises auf eine Basisfolge und eines Hinweises auf die zugewiesene zyklische Verschiebung an das Mobilgerät; und
Mittel zum Empfangen eines Demodulations-Referenzsignals unter Verwendung einer mobilgerätspezifischen Demodulations-Referenzsignalfolge vom Mobilgerät, wobei die mobilgerätspezifische Demodulations-Referenzsignalfolge ein Abschnitt einer mobilgerätspezifischen Folge ist, die von der zyklischen Verschiebung abhängt, und wobei der Abschnitt von einer mobilgerätspezifischen physischen Ressourcenblockzuweisung abhängt.

## Revendications

1. Procédé, qui comprend :
la réception (501), par un dispositif mobile, d'une indication d'une séquence de base et d'une indication d'un décalage circulaire depuis une station de base ;
l'obtention (502), par le dispositif mobile, d'une séquence de signaux de référence de démodulation spécifique à un dispositif mobile, en :
calculant une séquence spécifique à un dispositif mobile en appliquant le décalage circulaire indiqué par l'indication reçue d'un décalage circulaire à la séquence de base indiquée par l'indication reçue d'une séquence de base ; et
sélectionnant une partie de la séquence spécifique à un dispositif mobile calculée pour utiliser en tant que séquence de signaux de référence de démodulation spécifique à un dispositif mobile en fonction d'une attribution de bloc de ressources physiques spécifique à un dispositif mobile.

2. Procédé selon la revendication 1, dans lequel la séquence de base indiquée comprend au moins l'une parmi : une séquence de Zadoff-Chu, une séquence de Zadoff-Chu étendue, une séquence de Zadoff-Chu tronquée ou une séquence recherchée par un ordinateur.

3. Procédé selon l'une quelconque des revendications 1-2, dans lequel une valeur de décalage circulaire pour le décalage circulaire indiqué par l'indication reçue d'un décalage circulaire est calculée en tant que : *c* = *n* (*b*/12), où *c* est la valeur de décalage circulaire, où *b* est une longueur de la séquence de base indiquée par l'indication reçue d'une séquence de base, et où *n* est un nombre entier tel que 0 ≤ *n* ≤ 11 tel que déterminé par l'indication reçue d'un décalage circulaire.

4. Procédé selon l'une quelconque des revendications 1-3, dans lequel la séquence de base indiquée présente une longueur supérieure ou égale à un nombre total de broches de fréquence pour une bande passante de système.

5. Procédé selon l'une quelconque des revendications 1-4, dans lequel l'attribution de bloc de ressources physiques spécifique à un dispositif mobile est pour un canal physique partagé en liaison montante.

6. Procédé selon l'une quelconque des revendications 1-5, qui comprend en outre : la transmission, par le dispositif mobile, d'un signal de référence de démodulation à l'aide de la séquence de signaux de référence de démodulation spécifique à un dispositif mobile.

7. Procédé selon l'une quelconque des revendications 1-6, dans lequel le décalage circulaire comprend l'un d'une pluralité de décalages circulaires, dans lequel chaque décalage circulaire de la séquence de base de la pluralité de décalages circulaires est orthogonal aux autres décalages circulaires de la séquence de base.

8. Appareil qui comprend :
des moyens pour recevoir (501) une indication d'une séquence de base et une indication d'un décalage circulaire depuis une station de base ;
des moyens pour obtenir (502) une séquence de signaux de référence de démodulation spécifique à un dispositif mobile, en :
calculant une séquence spécifique à un dispositif mobile en appliquant le décalage circulaire indiqué par l'indication reçue d'un décalage circulaire à la séquence de base indiquée par l'indication reçue d'une séquence de base ; et
sélectionnant une partie de la séquence spécifique à un dispositif mobile calculée pour utiliser en tant que séquence de signaux de référence de démodulation spécifique à un dispositif mobile en fonction d'une attribution de bloc de ressources physiques spécifique à un dispositif mobile.

9. Procédé, qui comprend :
l'assignation (601), par une station de base, d'un décalage circulaire à un dispositif mobile ;
la transmission (602), depuis la station de base vers le dispositif mobile, d'une indication d'une séquence de base et d'une indication du décalage circulaire assigné ; et
la réception, par la station de base, d'un signal de référence de démodulation à l'aide d'une séquence de signaux de référence de démodulation spécifique à un dispositif mobile depuis le dispositif mobile, dans lequel la séquence de signaux de référence de démodulation spécifique à un dispositif mobile est une partie d'une séquence spécifique à un dispositif mobile qui est fonction du décalage circulaire et dans lequel la partie est fonction d'une attribution de bloc de ressources physiques spécifique à un dispositif mobile.

10. Procédé selon la revendication 9, dans lequel la séquence de base indiquée présente une longueur supérieure ou égale à un nombre total de broches de fréquence pour une bande passante de système.

11. Procédé selon l'une quelconque des revendications 9-10, qui comprend en outre : la réception, par la station de base, de l'indication de la séquence de base depuis le réseau.

12. Procédé selon l'une quelconque des revendications 9-11, dans lequel une valeur de décalage circulaire pour le décalage circulaire indiqué par l'indication d'un décalage circulaire est calculée en tant que : *c* = *n* (*b*/12), où c est la valeur de décalage circulaire, où b est une longueur de la séquence de base indiquée par l'indication d'une séquence de base, et où *n* est un nombre entier tel que 0 ≤ *n* ≤ 11 tel que déterminé par l'indication d'un décalage circulaire.

13. Procédé selon l'une quelconque des revendications 9-12, dans lequel la partie sélectionnée de la séquence spécifique à un dispositif mobile calculée correspond à une attribution de bloc de ressources physiques spécifique à un dispositif mobile.

14. Appareil qui comprend :
des moyens pour assigner (601) un décalage circulaire à un dispositif mobile ;
des moyens pour transmettre (602), vers le dispositif mobile, une indication d'une séquence de base et une indication du décalage circulaire assigné ; et
des moyens pour recevoir un signal de référence de démodulation à l'aide d'une séquence de signaux de référence de démodulation spécifique à un dispositif mobile depuis le dispositif mobile, dans lequel la séquence de signaux de référence de démodulation spécifique à un dispositif mobile est une partie d'une séquence spécifique à un dispositif mobile qui est fonction du décalage circulaire et dans lequel la partie est fonction d'une attribution de bloc de ressources physiques spécifique à un dispositif mobile.
